# DEMANDE DE BREVET EUROPEEN

(11) **EP 4 393 693 A1**
(43) Date de publication de la demande: **03.07.2024**
(21) Numéro de dépôt: 23150015.8
(22) Date de dépôt: 02.01.2023
(51) Int. Cl.: B32B 1/08, B32B 5/14, B32B 5/18, B32B 5/32, B32B 7/02, B32B 27/06, B32B 27/18, B32B 27/30

(54) **COMPLEXE ISOLANT TUBULAIRE BI-COUCHE EN POLYMERE THERMOPLASTIQUE RECYCLE ET PROCEDE D'OBTENTION**

(71) Demandeur: Heinzle, Olivier, Phillipe, 33114 Le Barp (FR)
(72) Inventeur: Heinzle, Olivier, Phillipe, 33114 Le Barp (FR)
(74) Mandataire: Tranvouez, Edern Morgan

(57) **Abrégé**

L'invention propose un complexe isolant thermique préférentiellement pour tubes ou tuyaux comprenant au moins deux couches isolantes de densité différentes, dans lequel chacune desdites couches est intégralement liée à la couche adjacente, caractérisé en ce que ledit complexe comprend :
- Une couche alvéolaire extrudée présentant des alvéoles dont la densité est progressive du centre de la couche alvéolaire vers la périphérie de celle-ci.
- Une couche externe entourant périphériquement et enveloppant sensiblement ladite couche alvéolaire y conférant une surface de protection externe et présentant des alvéoles ayant une densité comprise entre environ 1,10g/cm³ et 1,4 g/cm³, de préférence entre 1,15 g/cm³ et 1,3 g/cm³.

## Description

### Domaine technique

L'invention se rapporte au domaine des matériaux isolants thermiques recyclables. En particulier, l'invention se rapporte à un matériau isolant thermique pour tubes réalisé à partir de Polymère thermoplastique et comprenant au moins deux couches isolantes de densité différentes dont l'une est une couche alvéolaire présentant une densité progressive.

### État de l'art antérieur

Dans ce domaine, il est connu de recouvrir les canalisations de matériaux calorifuges pour rétention de chaleur et rétention de froid. Ces dernières années, des isolants en mousse poreux constitués de résines synthétiques comme le polyéthylène, le polystyrène et l'uréthane dur sont souvent utilisés comme revêtements de tuyaux d'isolation thermique comme décrit dans le brevet JPH091710. Ces matériaux présentent un certain nombre d'inconvénients comme par exemple le phénomène de déphasage et la dissipation de température vers l'extérieur. De plus, il a souvent été constaté que ces matériaux ne sont pas assez résistants et subissent des dégradations au cours du temps dues notamment à des dégradations physiques extérieures (chocs, intempéries, agressions liées aux UV, aux animaux).

Il est donc nécessaire d'améliorer les performances des matériaux isolants notamment en remédiant aux inconvénients des matériaux de l'art antérieur.

La présente invention vise cet objectif en fournissant un complexe isolant tubulaire destiné en premier lieu à une application industrielle pour une isolation de réseaux de tuyaux chauds ou froids, en polymère thermoplastique et comprenant au moins deux couches isolantes de densité différentes dont l'une est une couche alvéolaire présentant une densité progressive.

Il est connu également qu'un isolant est efficace quand il a une densité importante ou dispose de lames d'air.

Dans le domaine des lames d'air, on peut citer la demande WO2011057994 qui décrit un segment incurvé à paroi multicouche en matière plastique pour assembler des tuyaux qui comprend au moins une couche centrale réalisée dans un polymère thermoplastique ayant une structure cellulaire en nid d'abeilles, chacune des faces externes de cette couche centrale étant recouverte d'au moins une feuille d'une structure pleine réalisée dans un polymère thermoplastique. Cette demande ne concerne pas le domaine de l'isolation thermique des tuyaux et la couche centrale ne se présente pas sous la forme d'une mousse.

### Exposé de l'invention

L'invention vise à remédier aux inconvénients de l'état de la technique et notamment à proposer un matériau isolant sous forme d'un complexe présentant au moins 2 couches isolantes ainsi qu'un procédé amélioré pour obtenir ledit complexe isolant.

Pour ce faire l'invention propose un complexe isolant thermique préférentiellement pour tubes ou tuyaux comprenant au moins deux couches isolantes de densité différentes, dans lequel chacune desdites couches est intégralement liée à la couche adjacente, caractérisé en ce que ledit complexe comprend :
- Une couche alvéolaire (BC) extrudée présentant des alvéoles dont la densité est progressive du centre de la couche alvéolaire vers la périphérie de celle-ci. Dans un mode préféré, dans ladite couche alvéolaire (BC) la densité des alvéoles est plus haute en périphérie que dans la zone centrale de la couche alvéolaire et plus haute dans la zone proche de la lumière interne que la zone centrale.
- Une couche externe (A) entourant périphériquement et enveloppant sensiblement ladite couche alvéolaire y conférant une surface de protection externe et présentant des alvéoles ayant une densité comprise entre environ 1,10g/cm³ et 1,4 g/cm³, de préférence entre 1,15 g/cm³ et 1,3 g/cm³.

Selon l'invention, ladite couche alvéolaire (BC) du complexe isolant présente une densité progressive comprise 0,010 g/cm³ et 0,14 g/cm³, de préférence entre environ 0,016 g/cm³ et 0,12 g/cm³ et préférentiellement entre environ 0,022 g/cm³ et 0,10 g/cm³ au centre et dont la densité en périphérie est plus haute. En effet, ladite couche alvéolaire (BC) présente en périphérie, dans la partie (C), une densité d'alvéoles comprise entre environ 0,16 g/cm³ et 0,80 g/cm³, de préférence entre 0,18 g/cm³ et 0,6 g/cm³, préférentiellement entre 0,20 g/cm³ et 0,50 g/cm³.

Dans le cadre de l'invention, les deux couches sont réalisées à partir de matières premières choisies parmi le PVC usagé, les plastiques usagés de la famille des polymères, tel que l'ABS.

Selon un mode de réalisation, le complexe isolant selon l'invention est réalisé à partir d'une matière première telle que citée précédemment, qui est expansée et extrudée.

Selon un mode de réalisation spécifique, le complexe isolant selon l'invention comprend une couche externe (A) définie comme étant liée d'un seul tenant directement à la surface de la couche alvéolaire (BC) pour fournir une surface externe protectrice capable de résister aux expositions, notamment aux rayons UV et aux attaques physiques et environnementales. Cette couche externe (A) est en outre définie comme comprenant un ou plusieurs additifs choisis dans le groupe des additifs ignifuges, stabilisants aux ultraviolets, agents d'étanchéité, agents stabilisants de volume, agent anti-arrachement, colorants et pigments.

Un autre objet de l'invention se rapporte à un procédé d'obtention dudit complexe isolant décrit précédemment. Selon une variante dudit procédé, le complexe isolant est obtenu par coextrusion à l'aide de deux têtes d'extrusion différentes. Dans un mode préféré du procédé, la couche alvéolaire (BC) est formée par une tête d'extrusion à trois sorties, deux têtes d'extrusion servant à extruder les parties périphériques denses (partie C en particulier les couches C1 et C2) de la couche alvéolaire, la troisième tête permettant d'extruder la couche alvéolaire moins dense (partie B). Dans une variante préférée du procédé, la couche externe (A) est formée avec une première tête à une sortie.

Dans une mode de réalisation encore plus préféré, le procédé d'obtention du complexe isolant selon l'invention, comporte les étapes suivantes :
- Le chauffage de la matière première
- La coextrusion de la couche externe (A) avec une première tête d'extrusion
- La coextrusion de la couche alvéolaire (BC) avec une 2^{ème} tête d'extrusion.

Un autre objet de l'invention se rapporte à un matériau isolant apte à la réalisation d'un procédé tel que celui décrit ci-dessus.

La présente invention se rapporte également à l'utilisation d'un matériau isolant sous forme de complexe isolant tel que décrit précédemment comme revêtement pour l'isolation des tubes ou tuyaux, de préférence conducteurs de chaleur ou de froid.

La présente invention couvre également des tubes ou tuyaux revêtus d'un complexe isolant tels que décrits précédemment.

### Brève description des figures

[Fig. 1] : vue en coupe transversale de l'invention. Cette figure illustre la couche (BC) et montre la couche alvéolaire (B) à densité progressive.
[Fig. 2] : vue en coupe éclatée de l'invention montrant la couche externe (A), la couche alvéolaire (B) dont les alvéoles ont une densité progressive comme montré dans la figure 1 et la couche alvéolaire (C) subdivisée en une couche (C1) à la périphérie externe et en contact avec la couche externe (A) et une couche (C2) à la périphérie interne et en contact avec la couche alvéolaire à densité progressive (B) et la lumière interne (D).
[Fig. 3] : vue éclatée de la formation des couches de matériau en fonction des têtes d'extrusion (têtes 1 et 2) utilisées lors du procédé d'obtention du complexe isolant selon l'invention.
   La figure A, illustre la tête d'extrusion 1 à une sortie afin d'obtenir la couche externe (A).
   La figure B, illustre la tête d'extrusion 2 qui comprend 3 sorties spécifiques pour le façonnage respectivement des couches alvéolaires (C1), (B) et (C2)
[Fig. 4] : vue de face du complexe isolant fendu, comportant une fente à encoche triangulaire (F) ainsi qu'un rabat à rivet (R).

D'autres caractéristiques, détails et avantages de l'invention ressortiront à la lecture de la description qui suit, en référence aux figures.

### Description détaillée d'un mode de réalisation

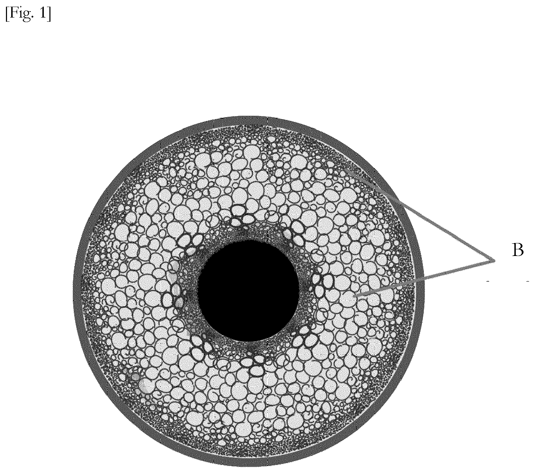

L'invention se rapporte à un complexe isolant comprenant au moins deux couches isolantes de densité différentes, dans lequel chacune desdites couches est intégralement liée à la couche adjacente et dont les caractéristiques seront mieux comprises avec le support des figures. En effet, comme illustré par la figure 1, l'invention comprend une couche alvéolaire (BC) extrudée présentant des alvéoles dont la densité est progressive du centre de la couche alvéolaire vers la périphérie de celle-ci. En outre, la densité des alvéoles à la périphérie de la couche (BC) est plus haute qu'au niveau central. En d'autres termes, ladite couche alvéolaire (BC) est dense en périphérie ; c'est-à-dire a une densité haute, présentant des alvéoles petites et serrées en périphérie par rapport à la zone centrale, moins dense en son centre c'est-à-dire ayant une densité faible, présentant des alvéoles plus larges et plus espacées dans le centre de la couche alvéolaire, et avec une densité plus haute dans la zone proche de la lumière interne par rapport à la zone centrale.

Dans le contexte de l'invention telle que brièvement décrite ci-dessus on entend par « densité progressive », une densité modulée en fonction de son emplacement dans la couche mousseuse alvéolaire. La densité étant définie ici par une concentration d'alvéoles par cm³. La répartition de la densité étant telle que définie dans la présente description et les revendications. Il est également sous-entendu dans cette définition, un gradient de densité des alvéoles entendu comme une variation spatiale de la densité sur une zone considérée, notamment au niveau des parties (B), (C), (C1) et (C2) telles que définies par la suite.

L'invention comprend également une couche externe (A) entourant périphériquement et enveloppant sensiblement ladite couche alvéolaire y conférant une surface de protection externe et présentant des alvéoles ayant une densité plus haute que la couche alvéolaire (BC). Ainsi, l'interface entre la couche externe (A) et la couche (BC) est réalisée à chaud par thermocollage ou thermosoudage de sorte qu'aucun matériau adhésif ou colle n'est requis pour maintenir l'intégrité de l'assemblage des deux couches.

De plus, la couche externe (A) qui est en polymère thermoplastique souple, de préférence en PVC, afin de reprendre sa forme initiale en cas de choc ou de déformation et également appelée couche « à mémoire de forme » a un rôle de protection de la couche alvéolaire (BC).

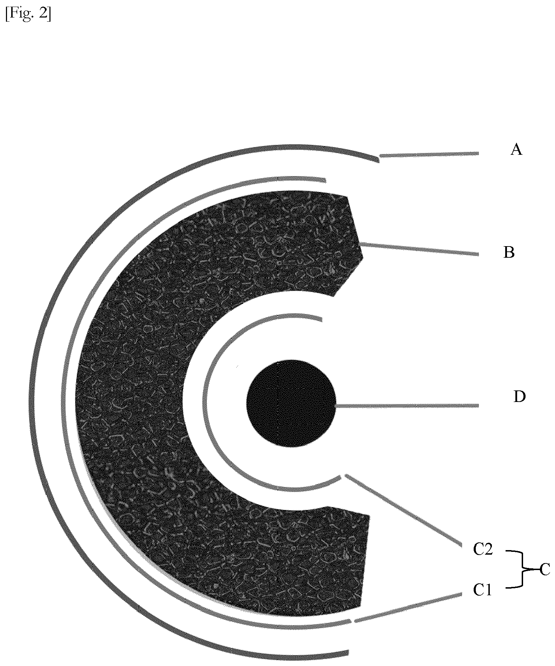

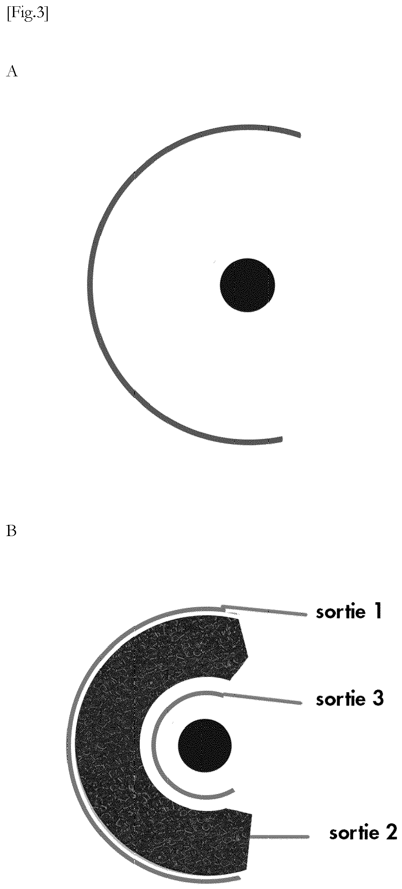

De préférence, la densité de la couche externe (A) est comprise entre environ 1,10g/cm³ et 1,4 g/cm³, de préférence entre 1,15 g/cm³ et 1,3 g/cm³. Ces caractéristiques sont illustrées dans la figure 2, montrant ainsi :
- la couche externe (A) qui est en polymère thermoplastique souple, de préférence en PVC, afin de reprendre sa forme initiale en cas de choc ou de déformation également appelée couche « à mémoire de forme ».
- la couche alvéolaire (B) dont les alvéoles ont une densité progressive comme montré dans la figure 1.
- la couche alvéolaire (C) dont les alvéoles ont une densité plus haute que dans la couche (B) et comme montré dans la figure 1. Pour plus de clarté dans la compréhension, la couche alvéolaire (C) est subdivisée en une couche (C1) à la périphérie externe et en contact avec la couche externe (A). La couche (C1) et la couche (A) étant collées ensembles par thermosoudage lors de la coextrusion de ces deux couches à l'aide de la tête d'extrusion 1 pour la couche (A) et de la sortie 1 de la tête d'extrusion 2 pour la couche (C1), comme illustré sur la figure 3.
- La couche alvéolaire (C) est subdivisée également en une couche (C2) à la périphérie interne et en contact avec la couche alvéolaire à densité progressive (B). La couche (C2) et la couche (B) étant collées ensembles par thermosoudage lors de la coextrusion de ces deux couches à l'aide de la sortie 2 de la tête d'extrusion 2 pour la couche (B) et de la sortie 3 de la tête d'extrusion 2 pour la couche (C2) comme illustré sur la figure 3.

La lumière interne (D) qui peut être pleine ou évidée afin de permettre l'insertion d'un tube ou d'un tuyau à isoler dont le diamètre est sensiblement égal ou légèrement inférieur au diamètre de la lumière (D). Ainsi dans un mode préféré, la lumière du complexe isolant est tubulaire et de préférence évidée. Cette dernière est de section droite avec des dimensions adaptées à l'objet à isoler. De préférence cet objet est tubulaire, tel qu'un tuyau ou un tube.

Dans le cadre de l'invention, les deux couches sont réalisées à partir de matières premières choisies parmi le PVC usagé ou recyclé, les plastiques usagés ou recyclés de la famille des polymères, tel que l'ABS. Les matières premières sont choisies également de manière à être recyclables.

Selon un mode de réalisation, le complexe isolant selon l'invention est réalisé à partir d'une matière première telle que citée précédemment, qui est préparé sous forme d'émulsion qui est ensuite expansée et extrudée.

Le terme «émulsion» fait référence au produit issus du chauffage des matières premières incluant optionnellement les additifs et ingrédients supplémentaires requis avant d'être extrudée en une couche mousseuse de préférence alvéolaire.

Le demandeur a découvert, de manière surprenante, que la densité progressive de la couche mousseuse alvéolaire (BC) fournie de nombreux avantages :
- La partie périphérique à densité haute (dénommée partie C1 qui est en contact avec la couche externe (A)) permet un collage sans adhésif avec ladite couche externe. Elle présente des alvéoles de plus petite taille que la partie centrale et dont la structure est plus rigide. Elle permet ainsi d'avoir une étanchéité parfaite. Elle a également pour rôle de stopper la condensation qui pourrait se développer dans les alvéoles. Cette condensation finissant par s'échapper au cours du temps, endommagerait le collage par coextrusion à chaud entre les deux couches et entrainant une détérioration de l'intégrité du matériau isolant.
- La partie centrale à faible densité (dénommé partie B) présente l'avantage de permettre le fractionnement du déphase et ainsi réduire la perte de température (chaude ou froide). En effet, la faible densité dans cette zone permet d'obtenir un pouvoir isolant beaucoup plus efficace. Ceci est dû à la grande taille des alvéoles.

Par haute densité ou densité élevée, on entend une densité des alvéoles de la couche mousseuse de préférence alvéolaire (BC) comprise entre environ 0,16 g/cm³ et 0,80 g/cm³, de préférence entre 0,18 g/cm³ et 0,6 g/cm³, préférentiellement entre 0,20 g/cm³ et 0,50 g/cm³. Cette densité correspond de préférence aux parties périphériques (C1 ou C2) de la couche BC.

Par faible densité ou densité basse, on entend une densité des alvéoles de la couche mousseuse de préférence alvéolaire (BC) comprise entre environ 0,010 g/cm³ et 0,14 g/cm³, de préférence entre environ 0,016 g/cm³ et 0,12 g/cm³ et préférentiellement entre environ 0,022 g/cm³ et 0,10 g/cm³. Cette densité correspond de préférence à la partie centrale de la couche BC.

Le complexe isolant est un isolant qui présente l'avantage d'être facile à manipuler et à poser, également simple à recycler car n'utilisant qu'un seul type de thermoplastique pure (PVC par exemple) sans adhésifs ou colles. Il est également avantageux car il peut être utilisé aussi bien en extérieur qu'en intérieur. En effet, la couche externe présente des propriétés protectrices notamment des propriétés anti-UV et/ou anti-choc et/ou anti-intempéries.

La particularité du complexe isolant de la présente invention est qu'il se compose de deux couches distinctes appelé ici "bi-matière", dans le sens où les deux couches du produit disposent de propriétés différentes mais sont formées à partir du même matériau.

Ce complexe isolant combine ces deux principes afin de lui permettre de stocker les températures quel que soient les différences entre les fluides isolés et l'extérieur (régime de températures négatives ou positives).

Ce complexe isolant se compose de :
- la couche externe fine (noté (A) sur les figures) ayant une épaisseur comprise environ de 1 à 2mm est une couche pleine et souple en PVC, elle sert de protection anti-UV, anti-choc et anti-intempérie. C'est un bouclier qui a pour mission de préserver toute les qualités et les performances de la couches interne. Cette couche est également à " mémoire de forme ", dans le sens où qu'importe le choc, ou la contrainte soumise au produit, il aura tendance à naturellement revenir dans sa forme d'origine.
- la couche interne (notée (BC) sur les figures) est une couche mousseuse alvéolaire à émulsion progressive, d'une épaisseur allant de 10 à 100 mm. Cette couche confère le pouvoir isolant au complexe isolant. Ce complexe isolant est avantageusement un isolant performant et peu encombrant comportant des alvéoles de tailles progressives entre l'intérieur et l'extérieur du produit. Les alvéoles sont de tailles réduites et très dense, c'est-à-dire avec une densité élevée aux frontières interne et externe (noté C, C1 ou C2 sur les figures) du complexe afin d'assurer une bonne étanchéité, d'éviter tout contact avec l'air ambiant et ainsi prévenir tout risque de condensation et donc de fuite, en fonction des différents régimes de températures. Les alvéoles vont en s'élargissant et sont moins denses c'est-à-dire avec une densité faible au centre du complexe afin de favoriser les vides et lames d'air dans le produit et ainsi créer un vrai bouclier thermique entre le réseau d'alvéoles et l'atmosphère autour et réduire ainsi le phénomène de déphasage.

En effet, une densité importante (ou élévée) permet une augmentation du Lambda et de l'inertie thermique. Le complexe isolant selon l'invention permet donc par les changements de densité notamment de la couche centrale alvéolaire (BC) de réduire le phénomène de déphasage et ainsi éviter toute dissipation de température vers l'extérieur.

### Procédé de fabrication

Dans son procédé de fabrication le complexe isolant est coextrudé à l'aide de deux têtes différentes.

Ainsi, le procédé comprend les étapes suivantes :
- Le chauffage de la matière première, telle que définie précédemment
- La coextrusion de la couche externe (A) avec une première tête d'extrusion
- La coextrusion de la couche alvéolaire (BC) avec une 2^{ème} tête d'extrusion.

De manière préférée, le procédé comprend les étapes citées précédemment et est réalisé avec une première tête à une sortie pour former la couche externe (A) appelée également « couche à mémoire de forme » et une seconde tête à trois sorties pour la couche alvéolaire (BC).

Dans ces trois sorties, deux servent à extruder les parties à densité élevée de la couche alvéolaire (partie C, en particulier les couches C1 et C2), la troisième permet d'extruder la couche alvéolaire moins dense partie (B)comme illustré par la figure 3. En effet, cette figure montre une vue éclatée de la formation des couches de matériau en fonction des têtes d'extrusion (têtes 1 et 2) utilisées lors du procédé d'obtention du complexe isolant selon l'invention. Les têtes d'extrusion fonctionnent ensemble simultanément ou bien séparées dans le temps ou bien encore à des vitesses d'extrusion différentes. De préférence, les têtes d'extrusion 1 et 2 fonctionnent simultanément.

La figure 3A, illustre la tête d'extrusion 1 qui ne comprend qu'une sortie afin d'obtenir la couche externe (A).

La figure 3B, illustre la tête d'extrusion 2 qui comprend 3 sorties spécifiques :
- La sortie 1 permet le façonnage de la couche alvéolaire (C1)
- La sortie 2 permet le façonnage de la couche alvéolaire (B)
- La sortie 3 permet le façonnage de la couche alvéolaire (C2)

De manière plus spécifique, la couche (C1) et la couche (A) sont collées ensembles par thermosoudage lors de la coextrusion de ces deux couches à l'aide de la tête d'extrusion 1 pour la couche (A) et de la sortie 1 de la tête d'extrusion 2 pour la couche (C1), comme illustré sur la figure 3.

La couche alvéolaire (C) est subdivisée également en une couche (C2) à la périphérie interne et en contact avec la couche alvéolaire à densité progressive (B). La couche (C2) et la couche (B) sont collées ensembles par thermosoudage lors de la coextrusion de ces deux couches à l'aide de la sortie 2 de la tête d'extrusion 2 pour la couche (B) et de la sortie 3 de la tête d'extrusion 2 pour la couche (C2) comme illustré sur la figure 3.

De manière préférée, dans ce procédé de coextrusion la couche externe (A) dite aussi « à mémoire de forme » et la couche alvéolaire à densité progressive (BC) viennent se thermocoller en procédé à chaud (entre 45° et 70°) pour fusionner en un seul élément de même matière.

Dans une mode de réalisation préféré du procédé, la couche externe A (à mémoire de formes) et la couche alvéolaire (mousseuse) (BC) seront coextrudées toutes les deux à l'aide d'un réchauffeur, d'une centrifugeuse et d'un saturateur diélectrique afin de réduire l'eau superflue pouvant se trouver dans le plastique recyclé, nécessitant de préchauffer le plastique pour le travailler pour éviter la formation de bulles non désirées et permettre un travail précis du plastique et une finition parfaite.

La couche alvéolaire C1 étant plus dense sur l'extérieur du complexe isolant permet aussi de protéger la couche alvéolaire (BC) de toute dégradation possible pendant la phase de thermocollage.

Dans un second temps un certain nombre d'additif peut être ajouter au cours du procédé dans le but d'apporter des propriétés supplémentaires notamment afin de respecter plusieurs critères de sécurité et de protection. De préférence, cet additif est recyclable ou à minima non polluant et sans impact pour l'environnement. Parmi les additifs on peut citer de manière générale les additifs anti-UV, anti-feu ou ignifuges, anti-intempéries et anti-arrachement ou des additifs pour favoriser l'émulsion. Plus précisément, les additifs anti-UV sont choisis parmi le noir de carbone, le dioxyde de titane, l'oxyde de zinc

En ce qui concerne les additifs anti-feu ou ignifuges on peut choisir parmi le dioxyde de carbone, l'hydroxyde de magnésium, hydroxyde d'aluminium, le polyphosphate d'ammonium Dans une variante de l'invention, le rôle anti-feu ou ignifuge est apporté par une matière première dépourvue de phtalates. Ainsi, à titre d'exemple on peut citer comme matière première du PVC pur et sans phtalate qui est naturellement ignifugé.

Les additifs anti-intempéries ou plastifiants sont choisis parmi les huiles et notamment les huiles végétales tels que l'huile de lin, l'huile de soja, les adipates et sébacates, le polyéthylène glycol, le propylène glycol, les anti-oxydants comme les phosphites organiques et certains anti-oxydants issus des plantes tel que le thé et le marc de raisin.

Parmi les additifs anti-arrachement, on peut citer les plastifiants dans la mesure où ces derniers permettent d'améliorer la flexibilité des plastiques ainsi que leurs souplesses et font également office d'additif anti-arrachement.

Comme additif pour favoriser l'émulsion, on peut citer l'azote ou le dioxyde de carbone. Dans un mode de réalisation préféré de l'invention, les additifs utilisés seront les plus écologiques et les plus recyclables possibles.

Dans le procédé, l'émulsion progressive de la couche alvéolaire BC sera géré par le biais d'une pompe à vide surpressée avec électrovanne et algorithme afin de pouvoir maitriser parfaitement les différentes densités de mousse en sortie d'extrudeuse.

Les deux types de mousse sont donc extrudés directement à la bonne densité et thermocollé dès leurs sorties, pour s'assembler dans le même temps avec la couche (A) « à mémoire de forme » externe et ainsi créer un isolant complet et d'une seule pièce.

Dans un mode de réalisation de l'invention, le complexe isolant présente une fente longitudinale permettant une introduction de l'objet à isoler plus aisée. Cette fente s'étend radialement à partir de la couche externe (A) jusqu'à la lumière du complexe isolant. La présence de la fente permet un positionnement rapide et sûr de l'objet à isoler dans la lumière du complexe isolant.

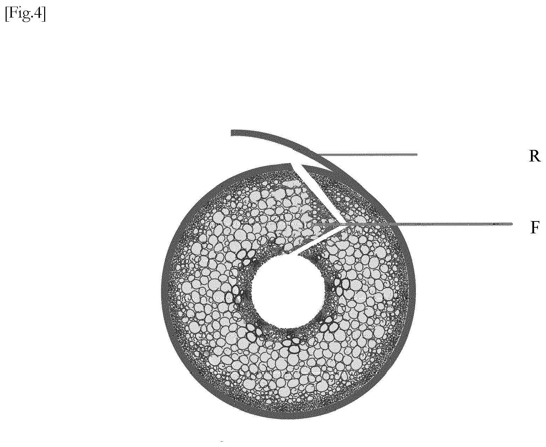

Selon un mode alternatif, le complexe isolant selon l'invention, présente une fente à encoche triangulaire (F) comme représenté sur la figure 4. Cette fente (F) est également longitudinale. Elle s'étend également radialement à partir de la couche externe (A) jusqu'à la lumière du complexe isolant. Ce type de fente (F) permet d'assurer une étanchéité plus importante de la fermeture. Dans ce mode de réalisation, l'obtention du complexe isolant présentant une fente à encoche triangulaire (F) nécessite un moule spécifique en pointe pendant l'extrusion afin d'obtenir l'encoche triangulaire nécessaire à la préservation des propriétés d'étanchéité du produit.

Dans une variante particulière de l'invention, la fente est recouverte par un rabat réalisé à partir de la couche externe (A) ou positionné sur cette dernière après positionnement du complexe isolant. De manière préférée, le rabat est exempt de tout ou partie de la couche alvéolaire (BC). De manière encore plus préférée, la forme et le positionnement du rabat est adapté pour recouvrir la fente sur toute sa surface et en assurer ainsi l'étanchéité.

Dans une variante préférée, le rabat est maintenu dans son positionnement initial par au moins un système de fixation tels que des moyens élastiques ou mécaniques tel que des rivets ou des encoches. Dans le contexte de recyclabilité de l'invention, il est précisé que le complexe isolant ainsi que le rabat est exempt de tout adhésif ou colle car ces produits ne permettent pas le recyclage des éléments sur lesquels ils sont présents.

Selon une variante particulière du dernier mode de réalisation et comprenant la variante avec rabat, lorsque le rabat est à fermeture mécanique, le pvc est chargé en électricité statique afin d'en faciliter la fermeture. Ce mode de réalisation est illustré par la figure 4. En effet, la figure 4 montre le rabat à rivet chargé en électricité statique (R). Elle montre également la fente à encoche triangulaire (F).

Dans le cadre de l'invention, le complexe isolant comprend également des manchons de raccordement et des raccords thermo-rétractables afin de pouvoir assembler les différents éléments du complexe isolant durant sa pose, et ainsi préserver une bonne étanchéité des jonctions. Ces manchons et raccords sont fabriqués exactement de la même manière que le complexe lui-même et selon le même procédé mais avec des épaisseurs différentes

Ainsi un autre objet de l'invention, se rapporte également à l'utilisation d'un matériau isolant sous forme de complexe isolant tel que décrit précédemment comme revêtement pour l'isolation des tubes ou tuyaux, de préférence conducteurs de chaleur ou de froid. Selon une variante de l'invention, le complexe isolant est utilisé pour la protection de surfaces tubulaires telles que des machines et notamment des machines de sport, des jeux extérieurs pour enfants, des outils, des éléments contendants.

### Exemples :

### EXEMPLE 1 : Procédé préféré d'obtention du complexe isolant selon l'invention.

Après une 1^{ére} étape de chauffage de la matière première qui est du PVC usagé, cette matière est coextrudée avec une première tête d'extrusion afin d'obtenir la couche externe (A) et avec une 2^{ème} tête d'extrusion à 3 sorties, la couche alvéolaire (BC) est obtenue.

Plus particulièrement, pour la réalisation du complexe isolant tel que décrit dans les figures 1 et 2, la couche (C1) et la couche (A) sont collées ensembles par thermosoudage lors de la coextrusion de ces deux couches à l'aide de la tête d'extrusion 1 pour la couche (A) et de la sortie 1 de la tête d'extrusion 2 pour la couche (C1), comme illustré sur la figure 3.

La couche alvéolaire (C) est subdivisée également en une couche (C2) à la périphérie interne et en contact avec la couche alvéolaire à densité progressive (B). La couche (C2) et la couche (B) étant collées ensembles par thermosoudage lors de la coextrusion de ces deux couches à l'aide de la sortie 2 de la tête d'extrusion 2 pour la couche (B) et de la sortie 3 de la tête d'extrusion 2 pour la couche (C2) comme illustré sur la figure 3.

### EXEMPLE 2 : complexe isolant selon l'invention.

Le procédé décrit dans l'exemple 1, permet d'obtenir un complexe isolant comprenant deux couches d'isolant (également appelé bi-matière) réalisé à partir de PVC ou d'une matière thermoplastique recyclée et recyclable tel que l'ABS ou d'un mélange thermoplastique éco-compatible et ayant les propriétés telles que présentées dans le tableau 1.

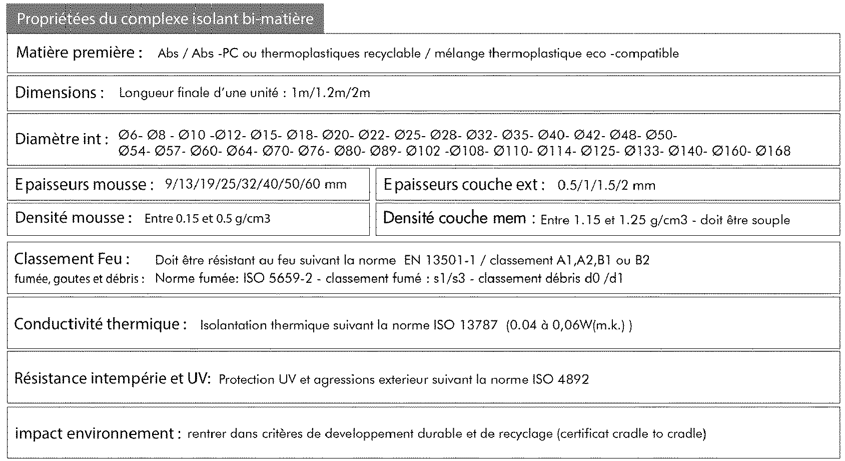

Ainsi, les propriétés présentées dans le tableau 1, permettent une utilisation du complexe isolant selon l'invention en tant que matériau isolant présentant l'avantage d'être facile à manipuler et à poser, également simple à recycler car n'utilisant qu'un seul type de thermoplastique pure (PVC par exemple) sans adhésifs ou colles. Il est également avantageux car il peut être utilisé aussi bien en extérieur qu'en intérieur. En effet, la couche externe présente des propriétés protectrices notamment des propriétés anti-UV et/ou anti-choc et/ou anti-intempéries.

### EXEMPLE 3 : Avantages et propriétés du complexe isolant selon l'invention par rapport à l'art antérieur

Le but de cet exemple est de montrer que le complexe isolant selon l'invention est au moins aussi performant que l'art antérieur et permet une utilisation polyvalente, adaptée à différents domaines techniques.

D'une manière générale, on observe dans l'art antérieur des manchons isolant pour tubes spécialisés. Ainsi, un produit n'aura pas les propriétés adéquates à toutes les plages de températures et à tous les environnements et nécessite des surcouches de protection afin d'être efficace et résistant.

En effet, dans le domaine de la protection des tuyaux de chaufferie, selon l'état de l'art il est nécessaire d'utiliser de la laine de verre recouverte de film pvc (diamètre externe supérieur à 50mm). Ceci implique la pose de la laine de verre, d'une attache au fil de fer suivit d'un recouvrement avec du pvc pour protéger cette dernière de l'humidité et des agressions.

De plus, pour les jonctions, on utilise des manchons élastomère pour les réseaux de chauffage de petit à moyen diamètre (15mm à 50mm) nécessitant des adhésifs pour la fermeture. Ceci exclu donc toute éventualité de recyclage en raison des colles et solvants d'adhésion.

En comparaison, le complexe isolant selon l'invention permet une mise en place simple autour des tuyaux grâce à sa conception unique. Ce complexe isolant est à la fois isolant, protecteur des chocs, des UV et des intempéries et est étanche. En effet, sa structure offre l'avantage de le rendre polyvalent en termes d'isolation et de protection. Au cours des essais réalisés (données non disponibles), il s'est avéré être aussi efficace que les matériaux de l'art antérieur, sans nécessiter une accumulation de différentes couches.

De mêmes les jonctions sont réalisées au moyen de manchons élaborés avec le même matériau que le complexe isolant selon l'invention, ce qui permet d'assurer une continuité d'isolation et d'étanchéité.

Le complexe isolant offre ici l'avantage d'avoir une efficacité comparable à l'art antérieur pour une durée de vie accrue, une simplicité de pose notamment lorsqu'il présente une fente longitudinale, une polyvalence et un coût d'installation réduit.

Pour les réseaux froids et extérieurs, selon l'art antérieur, il est nécessaire d'utiliser des coquilles en mousse PU rigide recouverte soit de film pvc protecteur soit de tôle en aluminium afin de lutter contre les agressions externes.

Ces différentes techniques nécessitent des matériaux et accessoires différents, notamment le recouvrement en tôle aluminium qui coute cher, prend du temps et demande des compétences spécifiques.

En comparaison, le complexe isolant selon l'invention permet une mise en place simple autour des tuyaux notamment lorsqu'il présente une fente longitudinale. Ce complexe isolant est à la fois isolant et la couche externe (à mémoire de forme) a montré une résistance aux chocs.

Ainsi, l'objet de l'invention dans ses différents modes de réalisation permet une utilisation sur tout type de tubes ou de tuyaux, pour tous types de températures, avec une plage de diamètre de tube beaucoup plus grande que l'art antérieur et pouvant aller jusqu'à 168mm comme illustré dans l'exemple 1, ne nécessitant aucune protection ou recouvrement supplémentaire après pose.

De plus, la limitation du phénomène de déphasage grâce aux alvéoles de densité progressive évite à la chaleur ou au froid de se disperser dans l'air, ce qui demande moins d'énergie et donc moins couteux pour garder les fluides à température.

Comme cela a été mentionné auparavant, la pose en devient plus simple, plus rapide, et plus économique ce qui rend l'objet de l'invention un produit très avantageux.

## Revendications

1. Complexe isolant thermique comprenant au moins deux couches isolantes de densité différentes, dans lequel chacune desdites couches est intégralement liée à la couche adjacente, **caractérisé en ce que** ledit complexe isolant comprend :
- Une couche alvéolaire (BC) extrudée présentant des alvéoles ayant une densité progressive comprise 0,010 g/cm³ et 0,14 g/cm³, de préférence entre environ 0,016 g/cm³ et 0,12 g/cm³ et préférentiellement entre environ 0,022 g/cm³ et 0,10 g/cm³ au centre et dont la densité en périphérie est plus haute,
- Une couche externe (A) entourant périphériquement et enveloppant sensiblement ladite couche alvéolaire (BC) y conférant une surface de protection externe et présentant des alvéoles ayant une densité comprise entre environ 1,10g/cm³ et 1,4 g/cm³, de préférence entre 1,15 g/cm³ et 1,3 g/cm³.

2. Complexe isolant selon la revendication 1, **caractérisé en ce que** ladite couche alvéolaire (BC) présente une densité progressive des alvéoles du centre de la couche alvéolaire vers la périphérie de celle-ci.

3. Complexe isolant selon la revendication 1ou 2, **caractérisé en ce que** ladite couche alvéolaire (BC) dont la densité des alvéoles est plus haute en périphérie que dans la zone centrale de la couche alvéolaire et plus haute dans la zone proche de la lumière interne que dans la zone centrale.

4. Complexe isolant selon la revendication 1 ou 2, **caractérisé en ce que** ladite couche alvéolaire (BC) présente en périphérie, dans au moins une partie (C, C1ou C2) de la périphérie une densité d'alvéoles comprise entre environ 0,16 g/cm³ et 0,80 g/cm³, de préférence entre 0,18 g/cm³ et 0,6 g/cm³, préférentiellement entre 0,20 g/cm³ et 0,50 g/cm³.

5. Complexe isolant selon la revendication 1, **caractérisé en ce que** au moins les deux couches sont réalisées à partir de matières premières choisies parmi le PVC usagé ou recyclé, les plastiques usagés ou recyclés de la famille des polymères.

6. Complexe isolant selon les revendications précédentes, **caractérisé en ce que** la matière première est expansée et extrudée.

7. Complexe isolant selon l'une des revendications 1 à 5, dans lequel ladite couche externe (A) est en outre définie comme étant liée d'un seul tenant directement à la surface de la couche alvéolaire (BC) pour fournir une surface externe protectrice capable de résister aux expositions, notamment aux rayons UV et aux attaques physiques et environnementales.

8. Complexe isolant selon les revendications 1à 7, dans lequel ladite de la couche externe (A) est en outre défini comme comprenant un ou plusieurs additifs choisis dans le groupe constitué d'ignifuges, de stabilisants aux ultraviolets, d'agents d'étanchéité, d'agents stabilisants de volume, d'agent anti-arrachement, de colorants et de pigments.

9. Procédé d'obtention d'un matériau isolant défini selon l'une des revendications précédentes, **caractérisé en ce que** le matériau isolant est coextrudé à l'aide de deux têtes d'extrusion différentes.

10. Procédé d'obtention d'un matériau isolant selon la revendication 9, **caractérisé en ce qu'**il comprend les étapes suivantes :
- Le chauffage de la matière première
- La coextrusion de la couche externe (A) avec une première tête d'extrusion
- La coextrusion de la couche alvéolaire (BC) avec une 2^{ème} tête d'extrusion.

11. Procédé d'obtention d'un matériau isolant selon la revendication 9, **caractérisé en ce que**:
- la couche externe (A) est formée avec une première tête d'extrusion à une sortie
- la couche alvéolaire (BC) est formée par une tête d'extrusion à trois sorties, deux têtes d'extrusion servant à extruder deux parties périphériques (C, C1, C2) de la couche alvéolaire, la troisième tête permettant d'extruder la couche alvéolaire moins dense (partie B).

12. Matériau isolant apte à la réalisation du procédé selon l'une des revendications 8 à 11.

13. Utilisation d'un complexe isolant selon les revendications 1 à 7 comme revêtement pour l'isolation des tubes ou tuyaux, de préférence conducteurs de chaleur ou de froid.

14. Tubes ou tuyaux revêtus d'un complexe isolant selon les revendications 1 à 7.
